# EUROPEAN PATENT APPLICATION

(11) **EP 4 807 179 A1**
(43) Date of publication of application: **16.09.2026**
(21) Application number: 25163686.6
(22) Date of filing: 14.03.2025
(51) Int. Cl.: F03D 17/00

(54) **A COMPUTER-IMPLEMENTED METHOD FOR PREDICTING A VERTICAL WIND PROFILE PRESENT AT A WIND TURBINE**

(71) Applicant: Siemens Gamesa Renewable Energy A/S, 7330 Brande (DK)
(72) Inventor: Gomez Gonzalez, Alejandro, 8000 Aarhus (DK); Loeven, Alex, 7400 Herning (DK); Abhishek, Kumar, 800014 Patna (IN); Parihar, Naveen, 560100 Bangalore (IN)
(74) Representative: SGRE-Association

(57) **Abstract**

The invention relates to a computer-implemented method for predicting a vertical wind profile (WP) present at a wind turbine (1), where the method processes bending moment vectors (BV) at consecutive time points (t) derived from measurements, each bending vector (BV) comprising for one or more bending directions (d1, d2) a bending moment (bm1, bm2) for each blade (5) present at a predetermined location along the respective blade (5) at a respective time point (t), the method comprising the following steps:
a) deriving from the plurality of bending moment vectors (BV) several spanwise load estimates (lesp) for each blade (5) and each bending direction (d1, d2), where each spanwise load estimate (lesp) is associated with a different horizontal portion (A1, A2, **..,** A6) of the circumferential area (CA) covered by the rotation of the blades (5),;
b) feeding at least the spanwise load estimates (lesp) to one or more first trained machine learning models (MLa, MLb, MLc) each predicting an intermediate vertical wind profile (WPIa, WPIb, WPIc);
c) deriving from the plurality of bending moment vectors (BV) several sectorwise load estimates (lese) for each blade (5) and each bending direction (d1, d2), where each sectorwise load estimate (lese) is associated with a different angular sector (AS) of the circumferential area (CA) covered by the rotation of the blades (5);
d) feeding at least the sectorwise load estimates (lese) to one or more second trained machine learning models (MLa', MLb', MLc') each predicting a second intermediate vertical wind profile (WPIa', WPIb', WPIc');
e) feeding the first and second intermediate vertical wind profiles (WPIa, WPIb, WPIc, WPIa', WPIb', WPIc') as an input to a third trained machine learning model (MLe) predicting the vertical wind profile (WP) as an output.

## Description

The invention relates to a computer-implemented method for predicting a vertical wind profile present at a wind turbine.

From the prior art, methods to estimate the wind speeds at a wind turbine by using operational parameters of the wind turbine are known. In one approach, the wind speed is estimated by a single look-up depending on the turbine power, the pitch angle, and the rotational speed of the blades. This approach has the disadvantage that the estimated wind speeds do not take into account the real spatial distribution of the flow field. Hence, this type of simple look-up does not provide the turbine with enough information about the complete wind field and may lead to the over- or underestimation of the true wind turbine performance.

Some methods of the prior art employ machine learning approaches to estimate the wind inflow conditions at a wind turbine based on turbine characteristics. Document [1] discloses the estimation of wind shear and veer from the operational data of the wind turbine using neural networks.

It is an object of the invention to provide a computer-implemented method for predicting a vertical wind profile present at a wind turbine with a high accuracy based on operational data of the wind turbine.

The computer-implemented method according to the invention predicts the vertical wind profile present at a wind turbine having a tower and a rotor with several blades attached at their roots to a hub of the wind turbine. The vertical wind profile to be estimated defines wind speeds occurring at different heights at the wind turbine in the region of the blades. Depending on the circumstances, the wind speeds may be absolute wind speeds or relative wind speeds, **i.e.** wind speeds relative to a reference wind speed **(e.g.** the wind speed at the hub of the wind turbine). Optionally, the vertical wind profile may also contain information about the wind direction at the different heights. The method processes bending moment vectors at consecutive time points derived from measurements during the operation of the wind turbine, where each bending moment vector comprises for one or more bending directions a bending moment for each blade present at a predetermined location along the respective blade at a respective time point of the consecutive time points. In a preferred embodiment, the bending moment is a root bending moment for each blade present at the root of the respective blade (i.e. in the area of proximity of the blade to the attachment to the hub) at a respective time point of the consecutive time points. The measurements for the bending moments may be acquired by appropriate blade sensors, e.g. strain gauges at the root of the respective blade. The consecutive time points may refer to time points during one or several revolutions of the blades. The data acquisition frequency of the measurements may differ from case to case. However, it is recommended that the data acquisition frequency of the bending moments of the blade is such that a number of measurements are performed for a complete revolution allowing a good characterization of the azimuthal variations of blade loads.

In a step a), several spanwise load estimates for each blade and each bending direction are derived from the plurality of bending moment vectors. Each spanwise load estimate is associated with a different horizontal portion of the circumferential area covered by the rotation of the blades, i.e. a different height as measured from the ground. A respective spanwise load estimate is a weighted average of the bending moments for the respective blade and the respective bending direction over the time points out of the consecutive time points when the respective blade passes (i.e. has an overlap with) the horizontal portion associated with the respective spanwise load estimate, where a weight of the weighted average represents the proportion of the respective blade overlapping with the horizontal portion associated with the respective spanwise load estimate at a respective time point.

In a step b), at least the spanwise load estimates are fed as an input to one or more first trained machine learning models each predicting an intermediate vertical wind profile as an output. Here and in the following, a trained machine learning model is a data driven model trained by machine learning with appropriate training data. The training of the first machine learning models is a supervised learning based on training data providing measured vertical wind profiles as a function of spanwise load estimates derived from measurements. The vertical wind profiles may e.g. be measured by lidar sensors or by wind sensors/anemometers installed along a meteorological mast located upstream at a suitable distance in front of the wind turbine. The measurements for deriving the spanwise load estimates may be based on blade sensors (e.g. strain gauges) at the root of the blades.

In a step c), several sectorwise load estimates for each blade and each bending direction are derived from the plurality of bending moment vectors. Each sectorwise load estimate is associated with a different angular sector of the circumferential area covered by the rotation of the blades, what in technical jargon is known as the azimuth position of the rotor. A respective sectorwise load estimate is an (unweighted) average of the bending moments for the respective blade and the respective bending direction over the time points out of the consecutive time points when the respective blade passes (i.e. has an overlap with) the angular sector associated with the respective sectorwise load estimate.

In a step d), at least the sectorwise load estimates are fed as an input to one or more second trained machine learning models each predicting a second intermediate vertical wind profile as an output. The training of the second machine learning models is a supervised learning based on training data providing measured vertical wind profiles as a function of spanwise load estimates derived from measurements. The vertical wind profiles may e.g. be measured by lidar sensors or by wind sensors/anemometers installed along a meteorological mast located upstream at a suitable distance in front of the wind turbine. The measurements for deriving the spanwise load estimates may be based on blade sensors (e.g. strain gauges) at the root of the blades.

In a step e), the first and second intermediate vertical wind profiles are fed as an input to a third trained machine learning model predicting the vertical wind profile as an output. Analogously to the training of the first and second machine learning models, the third machine learning model is trained by supervised learning with training data correlating a measured vertical wind profile (i.e. a desired output of the third machine learning model) with corresponding first and second intermediate vertical wind profiles.

The method of the invention enables a robust and reliable prediction of a vertical wind profile by using two different types of processing based on machine learning, namely a processing using spanwise load estimates and a processing using sectorwise load estimates. The method of the invention is more robust than methods known from the state of the art in cases where the wind profile is not well-behaved, e.g. in case of low-level jets.

In a preferred embodiment of the invention, the one or more bending directions comprise a flapwise bending direction and/or an edgewise bending direction of the respective blade. An edgewise bending direction refers to the bending of the respective blade around an axis substantially perpendicular to the rotation plane of the blades. A flapwise bending direction refers to the bending of the respective blade around an axis substantially in the rotation plane of the blades.

In another embodiment of the invention, one or more and preferably all of the following quantities are fed additionally to the one or more first trained machine learning models:
- the rotational speed of the rotor averaged over the time points out of the consecutive time points when each blade passes each horizontal portion;
- the pitch angle of each blade averaged over the time points out of the consecutive time points when it passes each horizontal portion;
- the azimuth position of the rotor averaged over the time points out of the consecutive time points when each blade passes each horizontal portion;
- the power generated by the wind turbine averaged over the time points out of the consecutive time points when each blade passes each horizontal portion.

The above-mentioned quantities are also considered during the training of the first machine learning methods. The pitch angle of a blade is a well-known quantity and refers to the angle of the blade with respect to the rotation plane of the blade. A pitch angle of 90° corresponds to an orientation of the blade perpendicular to the rotation plane such that the chord lines of the individual sections of the blade, corresponding to the lines connecting the leading edge and the trailing edge of the individual blade sections, is oriented pointing substantially perpendicular to the rotation plane. The azimuth position of the rotor is the angular measure of the blades, or one reference blade, along the rotation of the rotor. In some conventions, an azimuth position of the rotor of zero degrees is when one blade is pointing upwards (to the sky), whereas in other conventions, an azimuth position of zero degrees is when one blade is pointing downwards (to the ground). Which convention is used, is not relevant for the application of the method according to the invention.

In another preferred embodiment of the invention, one or more and preferably all of the following quantities are fed additionally to the one or more second trained machine learning models:
- the rotational speed of the rotor averaged over the time points out of the consecutive time points when each blade passes each angular sector;
- the pitch angle of each blade averaged over the time points out of the consecutive time points when it passes each angular sector;
- an azimuth position associated with each angular sector (e.g. the azimuth position corresponding to the center line of the respective angular sector);
- the power generated by the wind turbine averaged over the time points out of the consecutive time points when each blade passes each angular sector.

The above-mentioned quantities are also considered during the training of the second machine learning models.

The first and second and third machine learning models may refer to any known machine learning models. In a preferred embodiment, the first and/or second and/or third machine learning models comprise one or more of the following models:
- a model comprising one or more neural networks, e.g. a 1D convolutional neural network;
- Extreme Gradient Boosting;
- Random Forest.

In another preferred variant of the invention, the first and second intermediate vertical wind profiles and the vertical wind profile predicted by the third trained machine learning model are each absolute vertical wind profiles. Alternatively, the first and second intermediate vertical wind profiles and the vertical wind profile predicted by the third trained machine learning model are each normalized vertical wind profiles comprising wind speeds normalized with respect to the wind speed at the hub.

In a particular preferred embodiment of the invention, average bending moments for each blade and each bending direction averaged over the consecutive time points are processed by at least one additional machine learning model, where the at least one additional machine learning model predicts the average wind speed at the hub of the wind turbine averaged over the consecutive time points as an output, where the average wind speed is combined with the normalized wind speed output in step e) to obtain an absolute wind profile. The at least one additional machine learning model is trained based on supervised learning using corresponding training data correlating an input with a known/measured output.

In a preferred variant of the above embodiment, the at least one additional machine learning model comprises several fourth trained machine learning models and a fifth trained machine learning model, where each fourth machine learning model receives as an input at least the average bending moments and predicts an immediate average wind speed at the hub of the wind turbine as an output, where the intermediate average wind speeds are fed as an input to the fifth machine learning model which predicts the average wind speed as an output. The fourth and fifth machine learning models are trained based on supervised learning using corresponding training data correlating an input with a known/measured output.

In another preferred embodiment, one or more and preferably all of the following quantities are processed additionally by the at least one additional trained machine learning model:
- the rotational speed of the blades averaged over the consecutive time points;
- the power output of the wind turbine averaged over the consecutive time points;
- the pitch angle of each blade averaged over the consecutive time points;
- the azimuth position of the rotor averaged over the consecutive time points;
- the power generated by the wind turbine averaged over the consecutive time points;
- the yaw angle of the hub of the wind turbine averaged over the consecutive time points.

The yaw angle is a well-known quantity and refers to the angle between the hub axis (i.e. the horizontal rotor axis) of the wind turbine and the direction of the wind.

In another preferred embodiment, the at least one additional machine learning model comprises one or more of the following models:
- a model comprising one or more neural networks, e.g. a 1D convolutional neural network;
- Extreme Gradient Boosting;
- Random Forest.

Besides the above method, the invention refers to an apparatus for data processing, wherein the apparatus is configured to carry out the method according to the invention or one or more preferred embodiments thereof.

Furthermore, the invention refers to a computer program product with program code, which is stored on a machine-readable carrier, for carrying out the method according to the invention or one or more preferred embodiments thereof.

Moreover, the invention refers to a computer program with program code for carrying out the method according to the invention or one or more preferred embodiments thereof when the program code is executed on a computer.

In the following, embodiments of the invention will be described in detail with respect to the accompanying drawings wherein:
- Fig. 1: is a schematic representation showing a wind turbine and a vertical wind profile to be predicted by an embodiment of the invention;
- Fig. 2: is a schematic diagram illustrating an embodiment of the invention;
- Figs. 3 and 4: illustrate the derivation of the spanwise load estimates according to the embodiment of Fig. 2;
- Figs. 5 and 6: illustrate the derivation of the sectorwise load estimates according to the embodiment of Fig. 2;

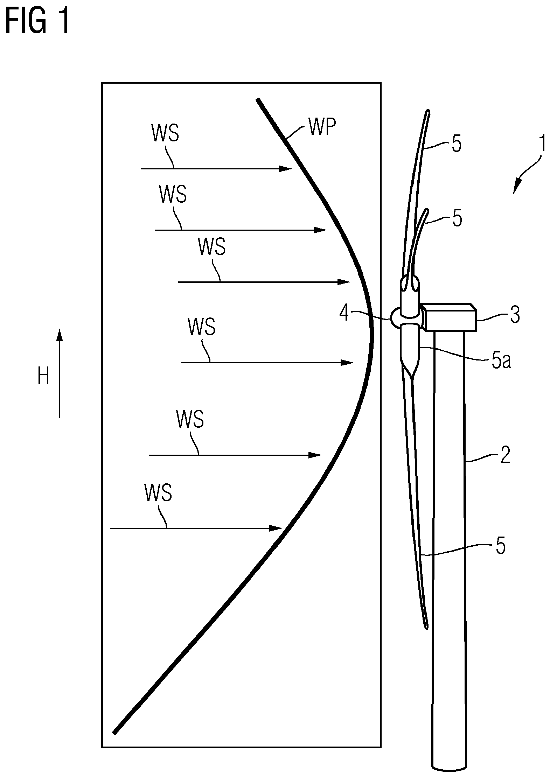

Fig. 1 shows a side view of a wind turbine 1 for which the vertical wind profile WP should be predicted according to an embodiment of the invention. The wind turbine 1 comprises a tower 2 extending in the height direction H. A nacelle 3 is located at the top of the tower 2. Rotor blades 5 of a rotor are attached with their roots at a hub 4. Wind occurring at the wind turbine 1 will affect the rotation of the blades 5 resulting in an electric power output. Fig. 1 further shows the vertical wind profile WP occurring at the wind turbine 1. The vertical wind profile WP consists of several different wind speeds ws at different heights in the vertical direction. If not stated to the contrary in the following, a wind profile WP refers to a normalized wind profile, i.e. a wind profile normalized with respect to the wind speed at the hub 4 of the wind turbine 1.

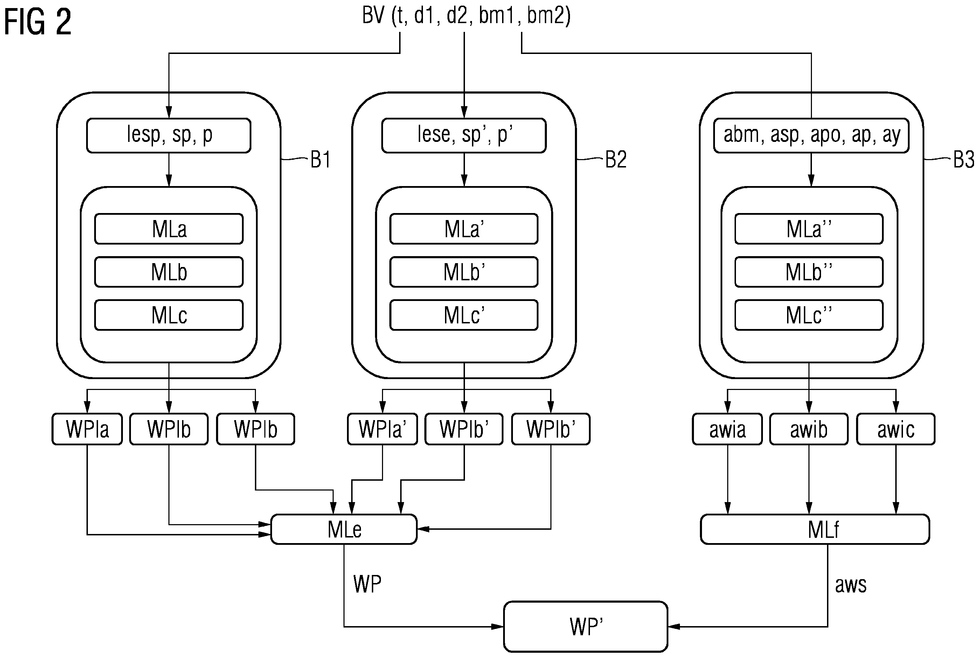

An embodiment of the invention is illustrated in the diagram of Fig. 2. The input of the prediction method described herein comprises bending moment vectors BV. The bending moment vectors BV result from measurements of bending moments at the roots 5a of the respective blades 5. E.g. strain gauges may be used for those measurements. The bending moment vectors BV are determined for a plurality of the consecutive time points t (e.g. time points during three revolutions of the blades) for each of the three blades 5. Each bending moment vector BV comprises a flapwise root bending moment bm1 in the flapwise direction d1, i.e. in the rotation plane of the blades 5, and an edgewise root bending moment bm2 in the edgewise direction d2, i.e. perpendicular to the rotation plane of the blades 5.

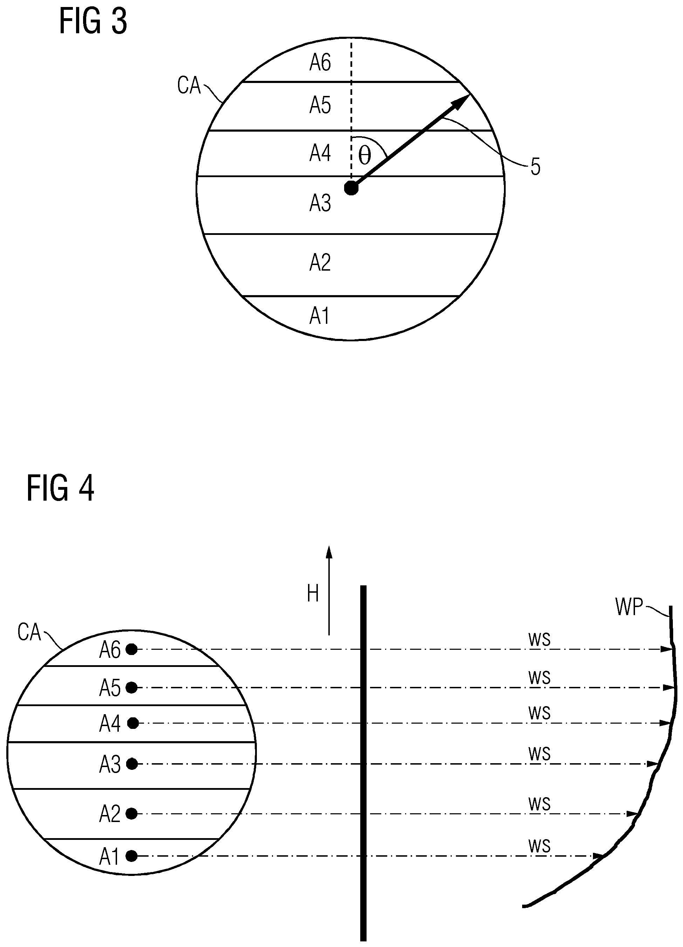

The bending moment vectors BV are processed by three different blocks B1, B2 and B3. In a first step of block B1, spanwise load estimates lesp are derived from the bending moment vectors BV. The derivation of the spanwise load estimates lesp is shown Figs. 3 and 4. Fig. 3 shows the circumferential area CA covered by the rotation of a blade 5 in its rotation plane. For deriving the spanwise load estimates lesp, the circumferential area CA is divided into several horizontal areas or portions. As an example, Fig. 3 shows six horizontal portions A1, A2, A3, A4, A5 and A6. Only one of the three blades 5 is Illustrated in Fig. 3 as a corresponding vector. The azimuth angle of the blade with respect to the vertical direction is designated as θ. For each of the horizontal portions, a corresponding spanwise load estimate lesp is derived. Hence, each spanwise load estimate is associated with a different horizontal portion.

A derived spanwise load estimate lesp is a weighted average of the root bending moments for the respective blade and the respective bending direction over the time points t when the respective blade passes the horizontal portion associated with the respective spanwise load estimate lesp. The corresponding weight of the weighted average is the proportion of the respective blade overlapping with the horizontal portion associated with the respective spanwise load estimate at a respective time t. Fig. 4 illustrates the correlation between the horizontal portions A1 to A6 and the corresponding wind speeds ws of the wind profile WP at different heights H along the tower of the wind turbine.

The spanwise load estimates lesp together with average rotational speeds sp and average pitch angles p are fed as an input to three different first trained machine learning models MLa, MLb and MLc. Optionally, other variables can be used as input as well, e.g. the power produced by the turbine, or the acceleration levels of the turbine. A respective average rotational speed sp refers to the rotational speed of a respective blade 5 averaged over the time points t when the blade passes a respective horizontal portion. A respective pitch angle p refers to the pitch angle of a respective blade 5 averaged over the time points t when the blade passes a respective horizontal portion. The first trained machine learning model MLa outputs a first intermediate vertical wind profile WPIa, the first trained machine learning model MLb outputs a first intermediate vertical wind profile WPIb and the first trained machine learning model MLc outputs a first intermediate vertical wind profile WPIc. Each first trained machine learning model MLa, MLb and MLc has been trained before by training data resulting from previous measurements which correlate measured input variables lesp, p and sp with measured wind speeds ws of a vertical wind profile WP, as shown in Fig. 4.

The data aggregated using the first trained machine learning models MLa, MLb and MLc maps the bending moment measured at the root of the blade across different geometries, depending on the proportion of the blade length intersected by each horizontal portion, as shown in Fig. 3. This is in principle an assumption on how a bending moment, which is being distributed along the blade, impacts the measurement point close to the root. Any known machine learning model may be used for the models MLa, MLb and MLc. In the embodiment described herein, Random Forest is used for the model MLa, Extreme Gradient Boosting is used for the model MLb, and a 1D convolutional network is used for the model MLc. The 1D convolutional network assumes each data row as a 1D image.

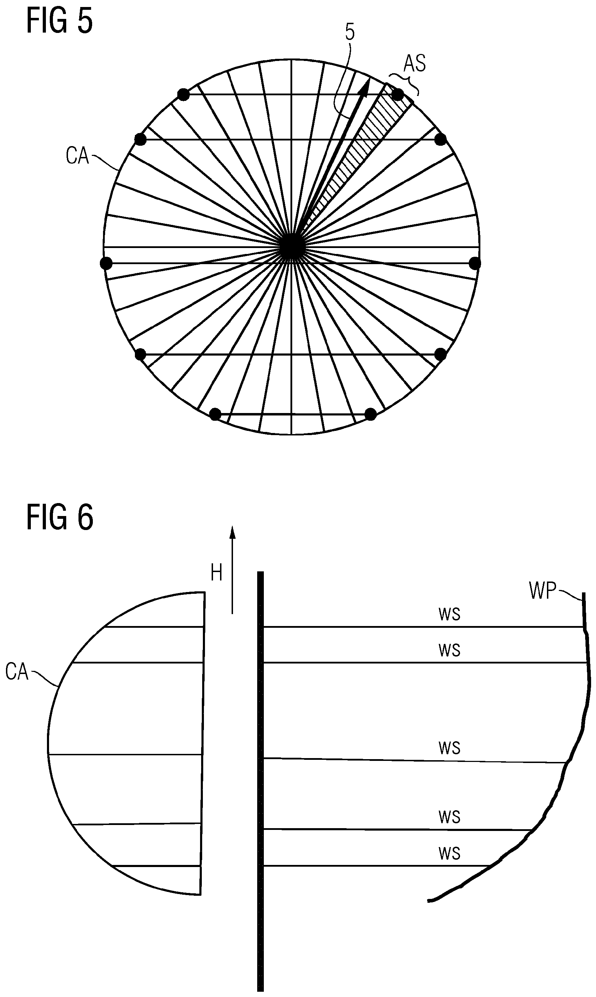

In a first step of block B2 of Fig. 2, the bending moment vectors BV are used to derive sectorwise load estimates lese. The derivation of the sectorwise load estimates lese is illustrated in Figs. 5 and 6. Fig. 5 shows the circumferential area CA of the rotation plane of the blades 5. The circumferential area CA is divided into a plurality of angular sectors. One of those angular sectors is highlighted by hatching and designated by AS. Each angular sector is associated with a corresponding sectorwise load estimate lese. A sectorwise load estimate is an average of the root bending moments for the respective blade and the respective bending direction over the time points t when the respective blade 5 passes the angular sector. In Fig. 5, horizontal lines illustrate the correlation between height values and corresponding angular sectors. The height values are associated with wind speeds ws of a vertical wind profile WP, as shown in Fig. 6.

The sectorwise load estimates lese together with average speeds sp' and average pitch angles p' are fed as an input to three different second trained machine learning models MLa', MLb' and MLc'. A respective average speed sp' refers to the rotational speed of a respective blade 5 averaged over the time points t when the blade passes a respective angular sector. A respective pitch angle p' refers to the pitch angle of a respective blade 5 averaged over the time points t when the blade passes a respective angular sector. The second trained machine learning model MLa' outputs a second intermediate vertical wind profile WPIa', the second trained machine learning model MLb' outputs a second intermediate vertical wind profile WPIb' and the second trained machine learning model MLc' outputs a second intermediate vertical wind profile WPIc'. Each second trained machine learning model MLa', MLb' and MLc' has been trained before by training data resulting from previous measurements which correlate measured input variables lese, sp' and p' with a measured vertical wind profile WS, as shown in Fig. 6.

The data aggregated using the second trained machine learning models MLa', MLb' and MLc' maps the bending moment measured at the root of the blade across different angular sectors, as shown in Fig. 5. Any known machine learning model may be used for the models MLa', MLb' and MLc'. In the embodiment described herein, Random Forest is used for the model MLa', Extreme Gradient Boosting is used for the model MLb', and a 1D convolutional network is used for the model MLc'. The 1D convolutional network assumes each data row as a 1D image.

The first intermediate wind profiles WPIa, WPIb to WPIc and the second intermediate wind profiles WPIa', WPIb' and WPIc' are input into a third trained machine learning model MLe. This third trained machine learning model MLe predicts a normalized wind profile WP. The third machine learning model MLe has been trained before by training data being based on corresponding intermediate vertical wind profiles as input and known measured vertical wind profiles as output. The third trained machine learning model estimates the best answer based on the answers given by the first trained machine learning models and the second trained machine learning models. The third trained machine learning model may be based on any known machine learning model, e.g. Random Forest, a neural network or Extreme Gradient Boosting

According to block B3, average wind speeds at the height of the hub are predicted. In a first step of block B3, average root bending moments abm are derived from the bending moment vectors BV. An average root bending moment for a respective blade and a respective bending direction is the average of the root bending moments over the consecutive time points t. The average root bending moments abm, average rotational speeds asp, average power outputs apo, average pitch angles ap and optionally the average yaw angles ay are fed as input to fourth machine learning methods MLa'', MLb'' and MLc''. The average rotational speed asp refers to the rotational speed of the blades 5 averaged over the consecutive time points t. The average power output asp refers to the power output of the wind turbine 1 averaged over the consecutive time points t. The average pitch angle ap refers to the pitch angle of each blade 5 averaged over the consecutive time points t. The average yaw angle ay refers to the yaw angle of the hub of the wind turbine averaged over the consecutive time points t.

Based on the above input, the fourth trained machine learning model MLa'', MLb'' and MLc'' each predict intermediate average wind speeds. Particularly, the fourth trained machine learning model MLa'' predicts the intermediate average wind speed awia, the fourth trained machine learning model MLb'' predicts the intermediate average wind speed awib and the fourth trained machine learning model MLc'' predicts the intermediate average wind speed awic. Each intermediate average wind speed refers to the average wind speed at the hub 4 of the wind turbine 1 averaged over the consecutive time points t. The fourth machine learning models MLa'', MLb'' and MLc'' have been trained before by training data comprising measured input data and corresponding measured average wind speeds.

The intermediate average wind speeds awia, awib and awic are fed as an input to another fifth trained machine learning model MLf. This fifth trained machine learning model predicts an average wind speed aws at the hub of the wind turbine averaged over the consecutive time points t based on the intermediate average wind speeds awia, awib and awic. As the other machine learning models, the fifth machine learning model MLf has been trained before by corresponding intermediate average wind speeds awia, awib, awic and a correlated measured average wind speed aws. The fifth trained machine learning model MLf estimates the best answer based on the answers given the fourth trained machine learning models.

The average wind speed aws is combined with the normalized wind profile WP output by the third trained machine learning model MLe to obtain an absolute wind profile WP'. In other words, the normalized wind speeds of the vertical wind profile WP are multiplied with the average wind speed aws to calculate the absolute vertical wind profile WP'.

The invention as described in the foregoing has several advantages. Particularly, the vertical wind profile is estimated with an ensemble of two different types of processing, namely a processing based on sectorwise load estimates and a processing based on spanwise load estimates. Due to these two types of processing, some specific wind profiles are better captured with one or the other type of processing such that the overall method becomes more robust in cases where the wind profile is not well behaved, for example in cases of low-level jets, which usually are characterized by an inversion of the velocity profile at a given height. Furthermore, the embodiment of the invention as described above decouples the hub-height wind velocity from the estimation of the shape of the vertical wind profile. This has shown to increase the level of accuracy of the prediction of the vertical wind profile.

### Literature

[1] M. Bertelè et al., The rotor as a sensor - observing shear and veer from the operational data of a large wind turbine, Wind Energ. Sci., 9, 1419 -1429, 2024

## Claims

1. A computer-implemented method for predicting a vertical wind profile (WP) present at a wind turbine (1) having a tower (2) and a rotor with several blades (5) attached at their roots (5a) to a hub (4), the vertical wind profile (WP) defining wind speeds (ws) occurring at different heights at the wind turbine (1) in the region of the blades (5), where the method processes bending moment vectors (BV) at consecutive time points (t) derived from measurements during the operation of the wind turbine (1), each bending vector (BV) comprising for one or more bending directions (d1, d2) a bending moment (bm1, bm2) for each blade (5) present at a predetermined location along the respective blade (5) at a respective time point (t) of the consecutive time points (t), the method comprising the following steps:
a) deriving from the plurality of bending moment vectors (BV) several spanwise load estimates (lesp) for each blade (5) and each bending direction (d1, d2), where each spanwise load estimate (lesp) is associated with a different horizontal portion (A1, A2, .., A6) of the circumferential area (CA) covered by the rotation of the blades (5), a respective spanwise load estimate (lesp) being a weighted average of the bending moments (bm1, bm2) for the respective blade (5) and the respective bending direction (d1, d2) over the time points (t) when the respective blade (5) passes the horizontal portion (A1, A2, .., A6) associated with the respective spanwise load estimate (lesp), where a weight of the weighted average represents the proportion of the respective blade (5) overlapping with the horizontal portion (A1, A2, .., A6) associated with the respective spanwise load estimate (lesp) at a respective time point (t);
b) feeding at least the spanwise load estimates (lesp) as an input to one or more first trained machine learning models (MLa, MLb, MLc) each predicting an intermediate vertical wind profile (WPIa, WPIb, WPIc) as an output;
c) deriving from the plurality of bending moment vectors (BV) several sectorwise load estimates (lese) for each blade (5) and each bending direction (d1, d2), where each sectorwise load estimate (lese) is associated with a different angular sector (AS) of the circumferential area (CA) covered by the rotation of the blades (5), a respective sectorwise load estimate (lese) being an average of the bending moments (bm1, bm2) for the respective blade (5) and the respective bending direction (d1, d2) over the time points (t) when the respective blade (5) overlaps with the angular sector (AS) associated with the respective sectorwise load estimate (lese);
d) feeding at least the sectorwise load estimates (lese) as an input to one or more second trained machine learning models (MLa', MLb', MLc') each predicting a second intermediate vertical wind profile (WPIa', WPIb', WPIc') as an output;
e) feeding the first and second intermediate vertical wind profiles (WPIa, WPIb, WPIc, WPIa', WPIb', WPIc') as an input to a third trained machine learning model (MLe) predicting the vertical wind profile (WP) as an output.

2. The method according to claim 1, wherein the one or more bending directions (d1, d2) comprise a flapwise bending direction (d1) and/or an edgewise bending direction (d2) of a respective blade (5).

3. The method according to claim 1 or 2, wherein in step b) one or more of the following quantities are fed additionally to the one or more first trained machine learning models (MLa, MLb, MLc):
- the rotational speed (sp) of the rotor averaged over the time points (t) when each blade (5) overlaps with each horizontal portion (A1, A2, ..., A6);
- the pitch angle (p) of each blade (5) averaged over the time points (t) when it overlaps with each horizontal portion (A1, A2, ..., A6);
- the azimuth position of the rotor averaged over the time points (t) when each blade (5) passes each horizontal portion (A1, A2, ..., A6);
- the power generated by the wind turbine (1) averaged over the time points (t) when each blade (5) passes each horizontal portion (A1, A2, ..., A6).

4. The method according to one of the preceding claims, wherein in step d) one or more of the following quantities are fed additionally to the one or more second trained machine learning models:
- the rotational speed (sp') of the rotor averaged over the time points (t) when each blade (5) overlaps with each angular sector (AS);
- the pitch angle (p') of each blade (5) averaged over the time points (t) when each blade (5) passes each angular sector (AS);
- an azimuth position associated with each angular sector (AS);
- the power generated by the wind turbine (1) averaged over the time points (t) when each blade (5) passes each angular sector (AS).

5. The method according to one of the preceding claims, wherein the first and/or second and/or third machine learning models (MLa, MLb, MLc, MLa', MLb', MLc', MLe) comprise one or more of the following models:
- a model comprising one or more neural networks;
- Extreme Gradient Boosting;
- Random Forest.

6. The method according to one of the preceding claims, wherein the first and second intermediate vertical wind profiles (WPIa, WPIb, WPIc, WPIa', WPIb', WPIc') and the vertical wind profile (WP) predicted by the third trained machine learning model (MLe) are each absolute vertical wind profiles.

7. The method according to one of the claims 1 to 5, wherein the first and second intermediate vertical wind profiles (WPIa, WPIb, WPIc, WPIa', WPIb', WPIc') and the vertical wind profile (WP) predicted by the third trained machine learning model (MLe) are each normalized vertical wind profiles comprising wind speeds which are normalized with respect to the wind speed (ws) at the hub (4).

8. The method according to claim 7, wherein average bending moments (abm) for each blade (5) and each bending direction (d1, d2) averaged over the consecutive time points (t) are processed by at least one additional machine learning model, where the at least one additional machine learning model predicts the average wind speed (aws) at the height of the hub (4) of the wind turbine (1) averaged over the consecutive time points (t) as an output, where the average wind speed (aws) is combined with the normalized vertical wind profile (WP) output in step e) to obtain an absolute wind profile (WP').

9. The method according to claim 8, wherein the at least one additional machine learning model comprises several fourth trained machine learning models (MLa'', MLb'', MLc'') and a fifth trained machine learning model (MLf), where each fourth machine learning model (MLa'', MLb'', MLc'') receives as an input at least the average bending moments (abm) and predicts an intermediate average wind speed (awia, awib, awic) at the hub (4) of the wind turbine (1) as an output, where the intermediate average wind speeds (awia, awib, awic) are fed as an input to the fifth machine learning model (MLf) which predicts the average wind speed (aws) as an output.

10. The method according to claim 8 or 9, wherein one or more of the following quantities are processed additionally by the at least one additional trained machine learning model:
- the rotational speed (asp) of the blades (5) averaged over the consecutive time points (t);
- the power output (apo) of the wind turbine (1) averaged over the consecutive time points (t);
- the pitch angle (ap) of each blade averaged over the consecutive time points (t);
- the azimuth position of the rotor averaged over the consecutive time points (t);
- the power generated by the wind turbine (1) averaged over the consecutive time points (t);
- the yaw angle (ay) of the hub (4) of the wind turbine (1) averaged over the consecutive time points (t).

11. The method according to one of claims 8 to 10, wherein the at least one additional machine learning model comprises one more of the following models:
- a model comprising one or more neural networks;
- Extreme Gradient Boosting;
- Random Forest.

12. An apparatus for data processing, wherein the apparatus is configured to carry out a method according to one of the preceding claims.

13. A computer program product with program code, which is stored on a machine-readable carrier, for carrying out a method according to one of claims 1 to 11 when the program code is executed on a computer.

14. A computer program with program code for carrying out a method according to one of claims 1 to 11 when the program code is executed on a computer.
